# EUROPEAN PATENT SPECIFICATION

(11) **EP 0 504 803 B1**
(45) Date of publication and mention of the grant of the patent: **19.07.1995**
(21) Application number: 92104589.4
(22) Date of filing: 17.03.1992
(51) Int. Cl.: D03D 47/12, B29D 15/00

(54) **Toothed wheel to control the gripper straps in shuttleless looms and manufacturing method thereof**
Zahnrad für die Kontrolle von Greiferbänden in schützenlosen Webmaschinen und Verfahren zur Herstellung
Roue dentée pour contrôler les bandes à griffes des métiers à tisser sans navelte et procédé de fabrication

(30) Priority: 22.03.1991 IT MI910783
(43) Date of publication of application: 23.09.1992
(73) Proprietor: SOMET SOCIETA' MECCANICA TESSILE S.p.A., 24020 Colzate-Bergamo (IT)
(72) Inventor: Viscardi, Ettore, I-24027 Nembro, Bergamo (IT)
(74) Representative: Faggioni, Marco, Dr. Ing.

(56) References cited:
- DE-A- 3 638 673
- DE-C- 3 527 202
- LU-A- 60 570

## Description

The present invention concerns a toothed wheel to control the gripper straps in shuttleless looms, and particularly a wheel with a highly wearproof toothing.

The invention also concerns a particularly simple and efficient method to manufacture said toothed wheel.

As known, in shuttleless looms the weft yarn is stretched across the shed, between the warp yarns, by a pair of grippers movable along said shed: a carrying gripper which grips the weft yarn from a weft presenting device and conveys it to the centre of the shed; and a drawing gripper which receives the weft yarn from the carrying gripper, at the centre of the shed, and conveys it to the opposite end of the loom.

The reciprocating movement of the grippers is obtained by means of flexible slotted straps, fixed at one end to the grippers and controlled at the other end by toothed wheels, positioned at the two sides of the loom, on which said straps wind up. The toothing of the wheels engages into the slots of the straps, which are driven thereby. To obtain the wanted back and forth motion of the grippers from the end to the centre of the shed, the toothed wheels thus rotate in one sense for a short length (from one turn fraction to a few turns, according to their diameter) at a very high speed, to allow the grippers to move forward, and then they immediately reverse their movement performing a rotation in the opposite sense, to cause the backward motion of the grippers.

The fact of adopting mechanical members performing high-speed alternate movements makes it indispensable for the mass of such members to be as reduced as possible, both in order to limit power consumption of the motors driving the same, and to make them last longer. In particular, the heavier parts of the wheel should be concentrated towards its centre and the wheel should be lighter as it gets close to its periphery.

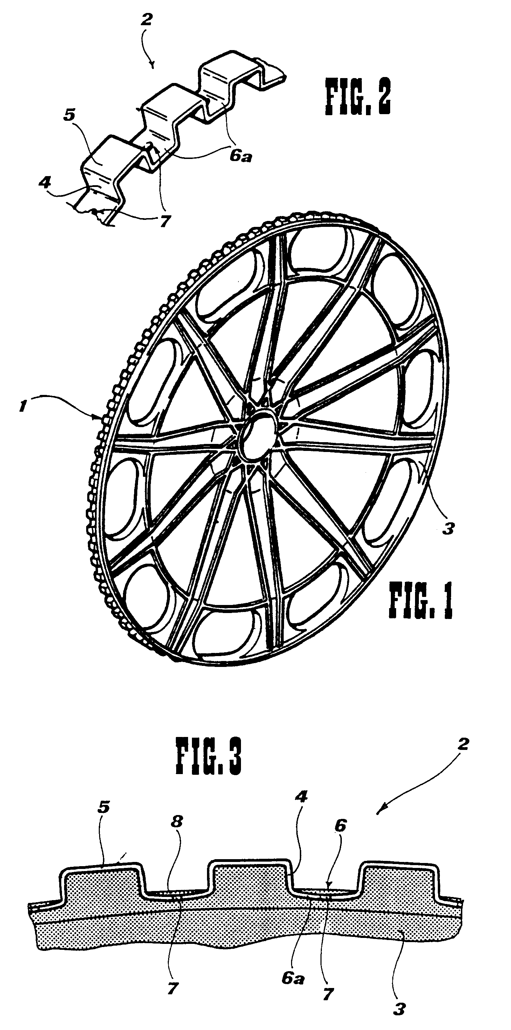

To fulfil said requirements, the toothed wheels forming the object of the present invention are now-a-days exclusively obtained by injection molding of thermoplastic material. They usually consist of spoke wheels, with wide lightening slots surrounded by stiffening ribs, as shown for example in fig. 1 of the accompanying drawings. Thermoplastic material is used, as well as for its lightness and easy moldability, also for its low cost; it is however not exempt from drawbacks. It should in fact be noted that, just on account of the high speed and of the sudden reversals of rotation of the wheels, their toothing is subjected to high mechanical stresses by the flexible straps drawn by said wheels. Such stresses, which determine a local overheating of the wheel toothing, are apt to deteriorate the mechanical characteristics of the thermoplastic material from which the wheel is formed, thereby accelerating the wear of said toothing. It thus happens, at present, that toothed wheels have to be replaced - with consequent heavy economical losses - because their toothing is no longer apt to efficiently control the straps, while their general structure is still perfectly suited to fulfil the intended purpose.

Some attempts have already been made in known technique to overcome this drawback, by forming the toothed wheels with metallic inserts buried into the thermoplastic material in correspondence of the teeth parts most subjected to wear, that is, on their sides. Nevertheless, in such wheels, the metallic inserts are actually provided on their periphery, that is, in a critical point as far as weight, as already explained above. The inertia of such wheels is thereby considerably increased, with consequent drawbacks in operating the looms, especially the high-speed ones. Furthermore, the metallic inserts have to be manually introduced into the cavities of the mold wherein the toothed wheel is formed, and said operation is long and complicated, both due to the large number of said inserts and due to the actual difficulty in keeping them in the wanted position during the molding operations.

The object of the present invention is to therefore supply an improved toothed wheel, wherein - while fulfilling the requirements of lightness, and at only slightly higher manufacturing costs - the wear resistance of the toothing and thus the useful life of the wheel are notably increased.

Another object of the present invention is to supply an electrically conductive toothed wheel, apt to discharge to earth the electrostatic charges caused by rubbing of the gripper straps against the warp yarns.

A further object of the present invention is to supply a particularly efficient and economic method to manufacture the aforementioned toothed wheel.

According to the present invention, these objects are reached by means of a toothed wheel to control the gripper straps in shuttleless looms, of the type obtained by molding of thermoplastic material, characterized in that the outer surface of the teeth, or at least the portion of said surface meant to cooperate with the gripper straps, consists of a thin layer of a thermosetting material in one piece with the wheel body of thermoplastic material.

The toothed wheel of the present invention is preferably formed by injection molding, according to a method comprising the following steps:
- forming a continuous strip of thermosetting material - possibly reinforced with mineral, vegetal or synthetic fibres - with a fretted section substantially corresponding to that of the toothing of said wheel, by compression molding into a flat mold;
- cutting out a portion of said strip, of length and width substantially corresponding to those of the external circumferential surface of the toothed wheel;
- elastically deforming into a circle said strip portion and introducing it into the toothed wheel manufacturing mold, so that it elastically adheres onto the inner toothed profile of the mold;
- injection molding the wheel body with a thermoplastic material, subsequently incorporating therein said strip of thermosetting material.

Further characteristics and advantages of the toothed wheel according to the present invention will anyhow result more evident from the following detailed description of a preferred embodiment thereof, illustrated on the accompanying drawings, in which:
Fig. 1 is a perspective view of a toothed wheel of known type;
Fig. 2 is a partial perspective view of a fretted strip portion forming the peripheral surface of the toothing of the wheel according to the present invention; and
Fig. 3 is a sectional view of part of the toothed wheel comprising a strip portion buried into the wheel body of thermoplastic material.

According to the invention, the external layer of the toothing 1 of the wheel 3 consists of a continuous strip 2 of thermosetting plastic material, the fretted section of which reproduces the final profile of the toothing 1 of the wheel 3. The strip 2 is fixed to the wheel 3 preferably during the injection molding process, by introducing said strip into the mold before injecting the thermoplastic material forming the wheel body.

Preferably, the shape of the strip 2 exactly corresponds to the final shape of the toothing 1 in correspondence of the teeth sides 4 and tops 5, whereas it slightly differs therefrom in correspondence of the teeth bases 6. In fact - as clearly shown in fig. 3 - the bottom parts 6a of the fretted strip 2 are more "inwards", in respect of the wheel periphery, than the bases 6 of the wheel teeth as determined by the shape of the mold. Furthermore, in correspondence of said bottom parts 6a, the strip 2 comprises a hole or other equivalent slit 7. Thanks to this particular configuration of the strip 2 of thermosetting material, during injection molding of the toothed wheel 3 the fluid thermoplastic material penetrates through the holes 7 and fills the space between the bottom parts 6a of the strip and the mold surface which determines the bases 6 of the wheel teeth, thereby covering said bottom parts 6a with a layer 8 of thermoplastic material.

The fluid thermoplastic material forms the layers 8 by penetrating, as well as through the holes 7, also sideways of the bottom parts 6a, which - for this purpose - are slightly narrower than the width of the toothed wheel in that point. In this way, the layers 8 are perfectly integral with the body of the toothed wheel 3, thereby determining an excellent and safe anchorage of the strip 2 onto the wheel itself. In addition to this - and in order to favour a perfect adhesion of the strip 2 onto the wheel 3 also in correspondence of the strip parts which are not covered by thermoplastic material (teeth sides and tops) - the inner surface of the strip 2 has a high roughness.

As already said, the strip 2 is formed of a thermosetting material, so as to have excellent mechanical characteristics also in case of overheating of the wheel toothing due to friction with the gripper control straps. To allow forming the strip 2 of very reduced thickness (a few millimeter tenths), and thus with a very low overall weight, it is preferable to adopt therefor a composite structure comprising mineral, vegetal or synthetic fibres (for example carbon fibres or cotton fibres), buried into the thermosetting material.

When carbon fibres are used to reinforce the strip 2, it is possible to increase even further the surface hardness of said strip - and thus the useful life of the toothing of the wheel 3 - by applying thereon titanium nitrides, with a treatment known in technique as PVD, taking advantage of the electrical conductivity and of the resistance to high temperatures of such carbon fibres.

When the strip 2 is formed with carbon fibres, also the thermoplastic material forming the wheel 3 can advantageously be filled with coal dust. The whole toothed wheel thus becomes electrically conductive, whereby the statical electricity accumulated on the grippers - on account of their constant rubbing against the warp yarns - discharges to earth, through the straps (evidently also formed of materials having a good electrical conductivity) and through the toothed wheel. This allows to prevent electrostatic charges from accumulating on the warp yarns, which would determine the adhesion of dust flocks by electrostatic attraction.

The toothed wheel according to the present invention is manufactured using a preferred method allowing to reduce to practically nothing the time required to insert the strip 2 into the mold. According to said method, the strip 2 is formed by compression molding into a flat mold and, once removed from the mold, it is cut to the size exactly corresponding to the whole circumference of the toothed wheel 3. At this stage, the strip 2 is elastically curved to form a circle and is inserted into the mold of the toothed wheel. Thanks to its elasticity, the strip 2 tends to go back into its original straight position, thereby pressing elastically against the walls of the mold; said pressure - though modest - is more than sufficient to keep the strip perfectly positioned against the bottom of the corresponding mold cavity, with no need to resort to any special fixing system, nor to any special arrangement of the strip inside the mold.

It will thus be easily appreciated how, with the manufacturing method according to the present invention, the mold preparing times are drastically reduced in comparison to the methods making use of the known type metallic inserts. In fact, the time required for the complete molding operation of the toothed wheel of the invention is practically the same as that required for the known type wheels without inserts. The final cost of the toothed wheel thus shows an increase, in respect of the known type toothed wheels, only for what concerns the manufacturing cost of the strip 2 of composite material.

From the previous description, it appears at once evident how the present invention has fully reached the intended objects. In fact, the toothed wheel of the invention has an extremely hard and wearproof toothed working surface, without involving any weight increase of the wheel. The specific weight of the materials used to manufacture the strip 2 is in fact substantially equal to that of the thermoplastic material used to form the body of the toothed wheel. Moreover, as said above, it can easily be provided for the wheel to be electrically conductive, thereby eliminating any problems connected with the presence of electrostatic charges on the yarns being woven. Finally, the manufacture of the toothed wheel, and particularly the insertion and positioning of the strip 2 into the manufacturing mold, can be very easily and promptly carried out - without thus involving any additional costs - thanks to the special continuous and elongated shape given to the strip 2 and to its elasticity, as well as to the fact that said strip is originally produced in a straight position.

The invention has been described with reference to a preferred embodiment thereof, but it should evidently not be limited to the same. The protection scope of the invention therefore covers any possible modifications and improvements within reach of a technician skilled in the art, falling within the definition of the invention given in the following claims.

## Claims

1. Toothed wheel (3) to control the gripper straps in shuttleless looms, of the type obtained by molding of thermoplastic material, characterized in that the outer surface of the teeth (1), or at least the portion of said surface meant to cooperate with the gripper straps, consists of a thin layer (2) of a thermosetting material in one piece with the wheel body of thermoplastic material.

2. Toothed wheel as in claim 1), wherein said layer (2) of thermosetting material is reinforced with mineral, vegetal or synthetic fibres.

3. Toothed wheel as in claim 1) or 2), wherein said layer (2) is a continuous strip and shows up on the surface in correspondence of the sides (4) and tops (5) of the teeth, while being partially buried into the wheel body (3) of thermoplastic material in correspondence of the bases (6) of said teeth.

4. Toothed wheel as in claim 1) or 2), wherein said layer (2) in correspondence of the teeth bases (6) is narrower than the width of the toothed wheel in that point, and is moreover provided with a hole (7) or slit.

5. Toothed wheel as in claim 2), wherein said fibres are carbon fibres.

6. Toothed wheel as in claim 2), wherein said fibres are cotton fibres.

7. Toothed wheel as in claim 1) or 2), wherein the thickness of said layer (2) is below 1 mm.

8. Manufacturing method of a toothed wheel (3) to control the gripper straps in shuttleless looms, said toothed wheel being of the type formed by injection molding of thermoplastic material, characterized in that it comprises the following steps:
- forming a continuous thin strip (2) of thermosetting material - possibly reinforced with mineral, vegetal or synthetic fibres - with a fretted section substantially corresponding to that of the toothing (1) of said wheel (3), by compression molding into a flat mold;
- cutting out a portion of said strip (2), of length and width substantially corresponding to those of the external circumferential surface of the toothed wheel (3);
- elastically deforming into a circle said strip portion and introducing it into the toothed wheel manufacturing mold, so that it elastically adheres onto the inner toothed profile of the mold;
- injection molding the wheel body (3) with a thermoplastic material, subsequently incorporating therein said strip (2) of thermosetting material at its toothed peripheral surface.

9. Method as in claim 8), wherein the upper and lateral parts of said fretted section of the strip (2) of thermosetting material exactly correspond to the final profile of the tops (5) and, respectively, of the sides (4) of the wheel teeth, while the bottom parts (6a) of said strip (2) are more "inwards", in respect of the wheel periphery, than the bases (6) of the wheel teeth.

10. Method as in claim 9), wherein said bottom parts (6a) of the strip (2) comprise holes (7) or slits, of dimensions sufficient to let through a layer (8) of fluid thermoplastic material.

11. Method as in claim 9), wherein said bottom parts (6a) of the strip (2), in correspondence of the teeth bases (6), are narrower than the width of the toothed wheel (3) in that point, to an extent sufficient to allow the fluid thermoplastic material to penetrate sideways thereof.

## Patentansprüche

1. Zahnrad (3) für die Kontrolle von Greiferbändern in schützenlosen Webmaschinen, des Typs, der durch Formen thermoplastischen Materials erhalten wird, dadurch gekennzeichnet, daß die Außenflächen der Zähne (1) oder wenigstens der Teil der Fläche, die dazu gedacht ist, mit den Greiferbändern zusammenzuwirken, aus einer dünnen Schicht (2) eines wärmehärtenden Materials in einem Stück mit dem Radkörper aus thermoplastischem Material besteht.

2. Zahnrad nach Anspruch 1, bei dem die Schicht (2) aus wärmehärtendem Material mit mineralischen, pflanzlichen oder synthetischen Fasern verstärkt ist.

3. Zahnrad nach Anspruch 1 oder 2, bei dem die Schicht (2) ein kontinuierlicher Streifen ist und auf der Oberfläche entsprechend den Seiten (4) und Spitzen (5) der Zähne zu sehen ist, während sie teilweise in den Radkörper (3) aus thermoplastischem Material entsprechend den Basen (6) der Zähne eingelegt ist.

4. Zahnrad nach Anspruch 1 oder 2, bei dem die Schicht (2) entsprechend den Zahnbasen (6) schmaler ist als die Breite des Zahnrades in dem Punkt und darüberhinaus mit einem Loch (7) oder Schlitz versehen ist.

5. Zahnrad nach Anspruch 2, bei dem die Fasern Karbonfasern sind.

6. Zahnrad nach Anspruch 2, bei dem die Fasern Baumwollfasern sind.

7. Zahnrad nach Anspruch 1 oder 2, bei dem die Dicke der Schicht (2) unterhalb 1 mm liegt.

8. Herstellungsverfahren für ein Zahnrad (3) zur Kontrolle der Greiferbänder in schützenlosen Webmaschinen, wobei die Zahnräder von dem Typ sind, die durch Formspritzen aus thermoplastischem Material gebildet sind, dadurch gekennzeichnet, daß es die folgenden Schritte aufweist :
- Bilden eines kontinuierlichen dünnen Streifens (2) aus wärmehärtendem Material - ggf. mit mineralischen, pflanzlichen oder synthetischen Fasern verstärkt - mit einem geschnittenen Abschnitt, der im wesentlichen dem der Zahnung (1) des Rades (3) entspricht, durch Druckformen in eine flache Form;
- Ausschneiden eines Teiles des Streifens (2) auf eine Länge und Breite, im wesentlichen entsprechend derjenigen der äußeren Umfangsfläche des Zahnrades (3);
- elastisches Deformieren des Streifenteiles in einen Kreis und Einlegen desselben in die Herstellungsform für das Zahnrad, so daß es elastisch an dem inneren gezahnten Profil der Form anhaftet;
- Spritzformen des Radkörpers (3) mit einem thermoplastischen Material, danach Einbringen des Streifens (2) des wärmehärtenden Materials darin an seiner gezahnten Umfangsfläche.

9. Verfahren nach Anspruch 8, bei dem die oberen und seitlichen Teile des geschnittenen Abschnittes des Streifens (2) aus wärmehärtendem Material exakt dem endgültigen Profil der Spitzen (5) bzw. der Seiten (4) der Radzähne entsprechen, während die Bodenteile (6a) des Streifens (2) weiter "innen" liegen, in bezug auf den Radumfang, als die Basen (6) des Radzahns.

10. Verfahren nach Anspruch 9, bei dem die Bodenteile (6a) des Streifens (2) Löcher (7) oder Schlitze aufteilen, mit Abmessungen, die ausreichend sind, eine Schicht (8) fluiden thermoplastischen Materials durchzulassen.

11. Verfahren nach Anspruch 9, bei dem die Bodenteile (6a) des Streifens (2), entsprechend den Basen (6) der Zähne, schmaler sind als die Breite des Zahnrades (3) an dem Punkt, in einem Ausmaß, das ausreichend ist, daß das fluide thermoplastische Material zur Seite durchdringen kann.

## Revendications

1. Roue dentée (3) pour commander les brides à pinces des métiers à tisser sans navette, du type obtenu par moulage d'un matériau thermoplastique, caractérisée en ce que la surface externe des dents (1), ou au moins la portion de ladite surface destinée à coopérer avec les brides à pinces, consiste en une mince couche (2) d'un matériau thermodurcissable d'un seul tenant avec le corps de la roue de matériau thermoplastique.

2. Roue dentée selon la revendication 1, dans laquelle ladite couche (2) de matériau thermodurcissable est renforcée par des fibres minérales, végétales ou synthétiques.

3. Roue dentée selon la revendication 1 ou 2, dans laquelle ladite couche (2) est une bande continue et ressort sur la surface en correspondance des flancs (4) et des sommets (5) des dents, tout en étant partiellement enrobée dans le corps de la roue (3) de matériau thermoplastique en correspondance des bases (6) desdites dents.

4. Roue dentée selon la revendication 1 ou 2, dans laquelle ladite couche (2) en correspondance des bases (6) des dents est plus étroite que la largeur de la roue dentée en ces points, et est en outre dotée d'un orifice ou d'une fente (7).

5. Roue dentée selon la revendication 2, dans laquelle lesdites fibres sont des fibres de carbone.

6. Roue dentée selon la revendication 2, dans laquelle lesdites fibres sont des fibres de coton.

7. Roue dentée selon la revendication 1 ou 2, dans laquelle l'épaisseur de ladite couche (2) est inférieure à 1 mm.

8. Procédé de fabrication d'une roue dentée (3) pour commander les brides à pinces des métiers à tisser sans navette, ladite roue dentée étant du type obtenu par moulage par injection d'un matériau thermoplastique, ledit procédé étant caractérisé en ce qu'il comprend les phases consistant à :
- former une mince bande continue (2) de matériau thermodurcissable - éventuellement renforcé par des fibres minérales, végétales ou synthétiques - avec une section crénelée correspondant sensiblement à celle de la denture (1) de ladite roue (3), par moulage par compression dans un moule plat;
- couper une portion de ladite bande (2), d'une longueur et d'une largeur correspondant sensiblement à celles de la surface circonférentielle externe de la roue dentée (3);
- déformer élastiquement en un cercle ladite portion de bande et l'introduire dans le moule de fabrication de roue dentée, de manière qu'elle adhère élastiquement sur le profil denté interne du moule;
- mouler par injection le corps de la roue (3) avec un matériau thermoplastique, puis incorporer en son sein ladite bande (2) de matériau thermodurcissable à sa surface périphérique dentée.

9. Procédé selon la revendication 8, dans lequel les parties supérieures et latérales de ladite section crénelée de la bande (2) de matériau thermodurcissable correspondent exactement au profil final des des sommets (5) et, respectivement, des flancs (4) des dents de la roue, tandis que les parties inférieures (6a) de ladite bande (2) sont davantage "vers l'intérieur", par rapport à la périphérie de la roue, que les bases (6) des dents de la roue.

10. Procédé selon la revendication 9, dans lequel lesdites parties inférieures (6a) de la bande (2) sont comprennent des orifices ou fentes (7), de dimensions suffisantes pour laisser passer une couche (8) de matériau thermoplastique fluide.

11. Procédé selon la revendication 9, dans lequel lesdites parties inférieures (6a) de la bande (2), en correspondance des bases (6) des dents, sont plus étroites que la largeur de la roue dentée (3) en ces points, de manière suffisante pour permettre au matériau thermoplastique fluide de pénétrer par les côtés des parties inférieures.
